# EUROPEAN PATENT APPLICATION

(11) **EP 2 210 477 A1**
(43) Date of publication of application: **28.07.2010**
(21) Application number: 09001010.9
(22) Date of filing: 26.01.2009
(51) Int. Cl.: A01G 5/04

(54) **Stem for pot plants**

(71) Applicant: Hansen, Edvard Dirch, 2791 Dragor (DK)
(72) Inventor: Hansen, Edvard Dirch, 2791 Dragor (DK)
(74) Representative: Sundien, Thomas

(57) **Abstract**

A stem (101) for pot plants (105) comprising an elongated part (111), where said elongated part is adapted for extending through the plant soil (103) of said pot plant and a fixing section (113) in the top of said elongated part, where said fixing section is adapted for fixing said pot plant in the top of said elongated part.

## Description

The invention relates to a stem for pot plants, where said stem for pot plants constitutes a continuous piece of material which enables an easy attachment of pot plants in a flower arrangement such as a bouquet of flowers.

### Background

Every day millions of flower arrangements are sold worldwide. The florists normally incorporate cut flowers, branches and the like in flower arrangements. The cut flowers/plants are placed such that they obtain water from a type of a reservoir, which prolongs the lifetime of the cut flowers/plants somewhat. However, since the cut flowers have no root system, they will still start to wilt around a week after being cut from the plant. As a consequence, the lifetime of a flower arrangement with cut flowers/plants is quite short in comparison with flowers/plants still connected to their roots. In order to keep a flower arrangement with cut flowers/plants fresh and free from wilting parts, it needs to be changed on a regular basis, which is a time consuming and costly process.

Using pot plants, such as miniature pot plants, instead of cut flowers/plants in flower arrangements is one way to solve the problem with wilting flowers as 1) the pot plants contain the root system required if wilting is to be avoided, and 2) water can easily be supplied to the pot plants on a regular basis. By utilizing pot plants instead of cut flowers/plants, the lifetime of the flower arrangement can be prolonged significantly.

One way of attaching pot plants in flower arrangements as described in DE19912760A1 is accomplished by securing a bottom plate with a row of teeth pointing away from the plant to the pot plant underneath the pot with the use of rubber and a second set of teeth placed in the plant soil at the top of the pot. The plant can afterwards be fixed in the flower arrangement with the use of the teeth at the bottom plate and/or a tube, which extends downwards from the middle of the bottom plate, and which may also supply the plant with water. This way of inserting a pot plant into a flower arrangement requires a larger amount of different materials. The end result is a pot, which takes up more space than without the attachment device. This is troublesome for the florist as he/she often would want to place the pot plants as close to one another as possible in the flower arrangement. More importantly though, the process requires a lot of handling time for the florist and the florist would therefore most likely not use pot plants as an alternative to cut flowers in flower arrangement simply because it is a too cumbersome and time-consuming process to attach the pot plants.

### Object and description of the invention

The object of the present invention is to solve the above-mentioned problems.

The invention relates to a stem for pot plants, where said stem is inserted from above down into the plant soil surrounding the root system of the pot plant and pulled through at the bottom of the pot, which is equipped with at least one small hole. After the stem is pulled through the plant soil of the pot plant, the pot plant is fixed to the top of the stem, e.g. by rotation of the stem. In this way the pot plant acquires a stem allowing for easy attachment in a flower arrangement, such as a flower bouquet.

The stem for pot plants comprises an elongated part, where said elongated part is adapted for extending through the plant soil of said pot plant and a fixing section in the top of said elongated part, where said fixing section is adapted for fixing said pot plant in the top of said elongated part. The stem for pot plants is preferably rigid, but may be bendable to some extent.

For a florist to choose pot plants such as miniature pot plants as an attractive alternative to cut flowers in a flower arrangement, it is essential for the florist that the pot plant can be inserted into the flower arrangement in a simple straightforward and fast manner.

An advantage with having this invention executed in one continuous piece is that it is easy to employ and more importantly it renders the time-consuming assembling process, unavoidably connected with the invention described in DE19912760A1, superfluous.

In one embodiment of the invention, the pot plant is fixed to the stem by inserting the fixing section into the plant soil. The plant part of the pot plant further serves as means to keep the pot plant fixed to the stem.

One advantage with this embodiment of the invention is that the size of the pot plant is the same with and without the stem inserted. This allows a florist to place pot plants close together in a flower arrangement such as a bouquet of flowers in contrast to when using an attachment device such as the one described in DE19912760A1.

In another embodiment of the invention, the pot plant is fixed to the stem by securing the fixing section around the pot.

In one embodiment of the invention, the stem comprises two parts: an elongated part and a fixing section, where said elongated part and said fixing section can be joined in an easy manner such as clicking them together preferably after, but possibly also before said elongated part is inserted in the plant soil.

In one embodiment of the invention, the fixing section of said stem for pot plants comprises a top part from where at least one hook extends. However, the shape of the fixing section in the invention is not limited to a shape comprising a top part and one or more hooks.

In one embodiment of the invention, where the fixing section of the invention comprises a top part and one or more hooks, the top part is rounded, in the shape of a polygon such as a square or the like. The hook(s) extending from this top section is pointing downwards in a direction parallel or perpendicular to that of the elongated part or any direction there in between.

In one embodiment of the invention, where the fixing section of the invention comprises a ring part and one or more hooks, where the diameter of the ring part is smaller than the inner diameter of the pot in order to secure the soil and/or to support the plant.

The material for the invention must be firm enough to hold the pot plant at any angle without bending due to the gravitational force on the pot plant.

In one embodiment of the invention, the material of the stem includes iron, steel, plastic and/or wood. The invention is, however, in no way limited to these material choices.

In another embodiment of the invention, the material of the stem is such that when inserted into the plant soil the stem cannot easily be pulled out of the plant soil again.

In one embodiment of the invention, the material can be cut with a pair of scissors or similar.

The advantage with having the invention executed in a material which can be cut by a pair of scissors or the like is that the length of the stem can be varied according to the requirements in different flower arrangements and/or different positions within the same flower arrangement.

In another embodiment of the invention, the elongated part of the invention may have one or more pre-defined points at which it can be broken by hand. In this way, the length of said elongated part of the invention can also be adjusted without using a pair of scissors or the like, which is an advantage when these items are not at hand.

In one embodiment of the invention, the material for the invention is hollow and may have an opening at one end or more ends. It can additionally be equipped with a number of smaller holes along the side.

An advantage with using a hollow material in this invention is the resulting lower weight of the stem. This is highly relevant, when a florist uses pot plants in creating a flower arrangement such as a wedding bouquet as the weight of the bouquet should be comparable to a bouquet made from cut flowers in order for it to be convenient for the bride to carry the bouquet during a long day and possibly toss the bouquet as part of the wedding ritual.

Likewise, a hollow material and consequently lighter stem is an advantage when creating a larger flower arrangement. A florist will often use floral foam as the base of a flower arrangement into which the pot plants are inserted both from different directions and at various angles. As floral foam can be somewhat fragile, it is important to keep the weight of the stem for attaching the pot plant into the arrangement at a minimum to facilitate that the pot plant will stay in position - in particular when inserting the pot plant at a position non-parallel with the vertical axis.

Yet another advantage with using a hollow material is that it may serve as means to provide the pot plant with water in the form of a capillary effect. In this embodiment of the invention, the section(s) inserted into the soil provides the force to pull the water from a type of reservoir, which the elongated part is in contact with.

The invention can be used for pot plants of varying size ranging from a miniature pot plant to regular size pot plants. For the larger pot plants, more than one stem might be used to secure the plant firmly in the flower arrangement.

In one embodiment of the invention, the stem can be employed to support a pot plant held in a bag instead of a pot, where the hook(s) extending from the rounded section secures the stem into the soil and/or around the bag.

### Brief description of the drawings

Figure 1 illustrates the stem for pot plants inserted into a pot plant;
Figures 2a-b illustrate one way of inserting the stem into a pot plant;
Figures 3a-e illustrate different embodiments of the invention;
Figures 4a-d illustrate different ways of positioning the stem.

### Description of preferred embodiments

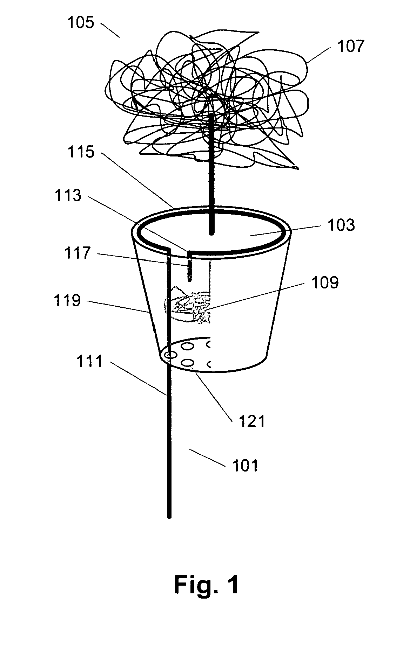

Figure 1 illustrates one embodiment of the stem for pot plants 101 inserted into the soil 103 of the pot plant 105, where the pot plant comprises a plant/flower part 107 and root net 109. The stem 101 is in this embodiment of the invention one continuous piece of material comprising an elongated part 111 and a fixing section 113. Here the fixing section comprises I) a ring part 115 with a diameter which is smaller than the inner diameter of the pot 119, and II) one hook 117 extending from the ring part 115. The bottom of the pot is equipped with a given number of small holes 121, which are placed on the perimeter of the pot 119. The number of holes is, however, not fixed to the illustrated number.

In another embodiment of this invention, the elongated part and the fixing section can be two separate pieces which are connected before or after the elongated part is inserted into the soil.

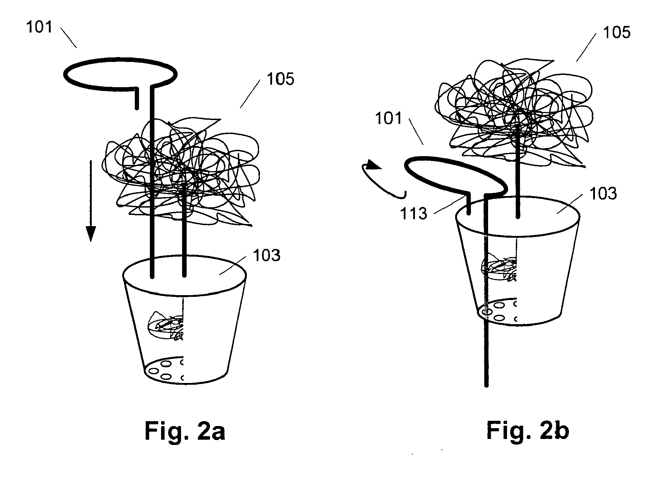

Figure 2a illustrates one step involved in inserting one embodiment of the stem for pot plants into a pot plant 105, where the stem 101 is inserted into the soil 103 from above.

Figure 2b illustrates the rotation of the stem 101, which in this embodiment places the fixing section of the invention 113 on top of the soil 103 by rotation of the stem.

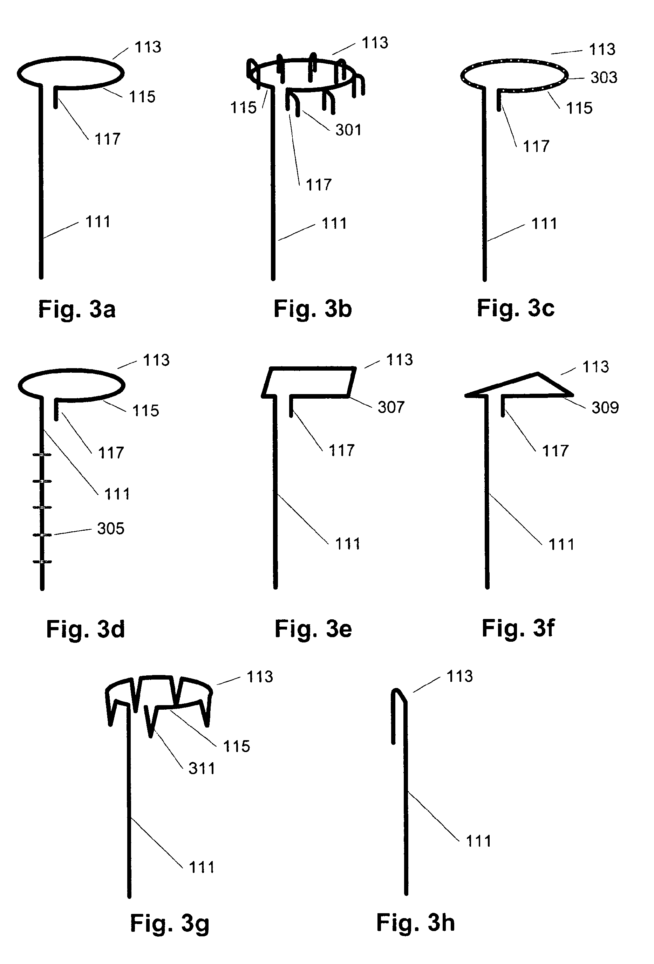

Figures 3a-h illustrate different embodiments of the invention. The invention is, however, not limited to the shown shapes.

Figure 3a illustrates an embodiment of the invention, where the stem for pot plants is one continuous piece of material comprising an elongated part 111 and a fixing section 113, where the fixing section 113 comprises a ring part 115 and one hook 117.

Figure 3b illustrates an embodiment of the invention, where the stem for pot plants is one continuous piece of material comprising an elongated part 111 and a fixing section 113, where the fixing section 113 comprises a ring part 115 from where hooks 117, 301 extend. These hooks are inserted into the plant soil or outside the pot (section(s) 117 and 301, respectively). The hook(s) are formed to facilitate the shape of the pot and can therefore be both rigid, bended of twisted. The hooks can have individually varying lengths or all have the same length.

Figure 3c illustrates an embodiment of the invention, where the stem for pot plants is one continuous piece of material comprising an elongated part 111 and a fixing section 113, where the fixing section 113 comprises a ring part 115 and a hook 117. In this embodiment, the ring part is equipped with a series of holes 303.

In another embodiment of the invention the holes 303 can also be positioned along the side of the elongated part, e.g. for taking up water from e.g. floral foam, or along the side of the hook(s), e.g. for giving of water.

Figure 3d illustrates an embodiment of the invention, where the stem for pot plants is one continuous piece of material comprising an elongated part 111 and a fixing section 113, where the fixing section 113 comprises a ring part 115 and a hook 117. The elongated part 111 of the stem has one or more positions 305, where divisions of the elongated part 111 can be broken off by hand thereby adjusting the length of the stem.

Figure 3e illustrates an embodiment of the invention, where the stem for pot plants is one continuous piece of material comprising an elongated part 111 and a fixing section 113, where the fixing section 113 comprises a squared top part 307 and a hook 117.

Figure 3f illustrates an embodiment of the invention, where the stem for pot plants is one continuous piece of material comprising an elongated part 111 and a fixing section 113, where the fixing section 113 comprises a triangle shaped top part 309 and a hook 117.

Figure 3g illustrates an embodiment of the invention, where the stem for pot plants is one continuous piece of material comprising an elongated part 111 and a fixing section 113, where the fixing section 113 comprises a ring part 115 from where smaller triangle hooks 311 extend. These triangle hooks can be inserted in the plant soil and/or fixed around the outside of the pot.

Figures 3a-g all show embodiments of the invention with a fixing section comprising a top part with one or more hooks. The top part of the fixing section has as a triangle, squared or ring shape, but could equally well be in the shape of a polygon or the like, and is therefore in no way limited to the shown shapes. Likewise, the hook(s) here depicted as pointing downwards in a direction parallel to the elongated part of the stem can be oriented in any other direction.

Figure 3h illustrates an embodiment of the invention, where the stem for pot plants is one continuous piece of material comprising an elongated part 111 and a fixing section 113 here in the shape of one single hook.

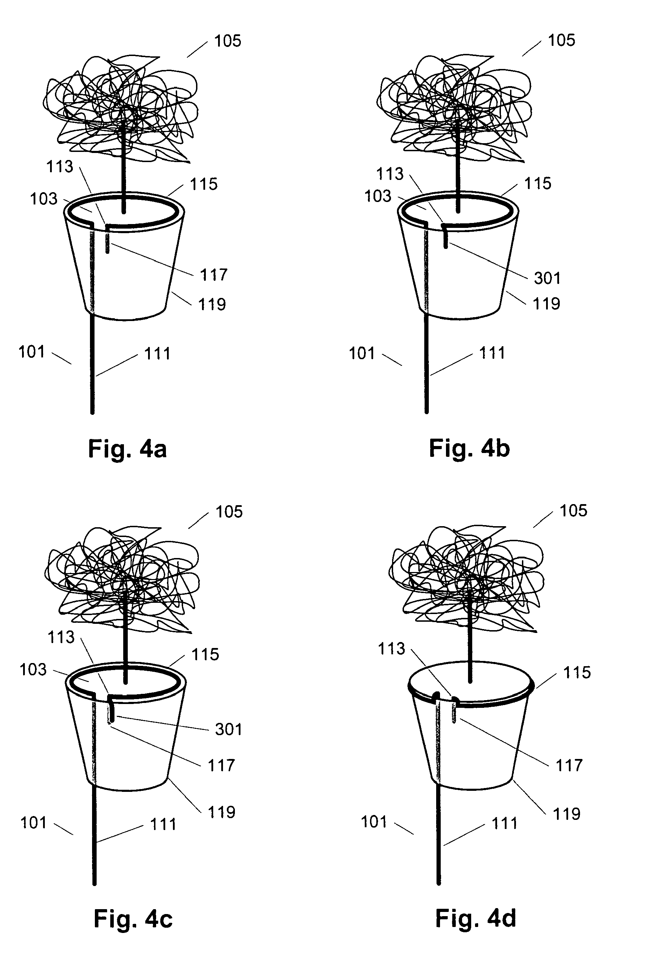

Figure 4a illustrates one preferred embodiment of the invention, where the stem for pot plants 101 is positioned such that the ring part 115 of the invention rests on top of the plant soil 103 and has a diameter, which is smaller than the inner diameter of the pot 119. The hook 117 is inserted into the plant soil 103.

Figure 4b illustrates another preferred embodiment of the invention, where the stem for pot plants 101 is positioned such that the ring part 115 of the invention rests on top of the plant soil 103 and has a diameter, which is smaller than the inner diameter of the pot 119. The hook 301 is secured outside the pot 119 and is shaped in order to follow the design of the top of the pot 119.

Figure 4c illustrates yet another preferred embodiment of the invention, where the stem for pot plants 101 is positioned such that the ring part 115 of the invention rests on top of the plant soil 103 and has a diameter, which is smaller than the inner diameter of the pot 119. One of the hooks 117 is secured inside the plant soil 103, whereas the other 301 is secured outside the pot 119 and shaped in order to follow the design of the top of the pot 119.

In this illustration, the invention is shown with two hooks, but could equally well contain more as shown in figure 3b.

Figure 4d illustrates another preferred embodiment of the invention, where the stem for pot plants 101 is positioned such that the ring part 115 of the invention has a diameter larger than that of the pot 119 and consequently surrounds the pot 119. In this illustration, the hook 117 is inserted into the plant soil.

Figures 4a-d all show embodiments of the invention with a fixing section comprising a top part with one or more hooks. The top part of the fixing section is ring shaped, but could equally well be in the shape of a polygon or the like as shown in figures 3a-g and is therefore in no way limited to the ring shape. Likewise, the hook(s) here depicted as pointing downwards in a direction parallel to the elongated part of the stem can be oriented in any other direction.

### References

- 101:: Stem for pot plants
- 103:: Plant soil
- 105:: Pot plant
- 107:: Flower/plant part of the pot plant
- 109:: Root net of the pot plant
- 111:: Elongated part
- 113:: Fixing section
- 115:: Ring shaped top part
- 117:: Hook
- 119:: Pot
- 121:: Holes at the bottom of the pot
- 301:: Hook
- 303:: Holes in the stem
- 305:: Position at which the elongated part can be broken by hand
- 307:: Square shaped top part
- 309:: Triangle shaped top part
- 311:: Smaller triangle hook

## Claims

1. A stem for pot plants, comprising:
- an elongated part, where said elongated part is adapted for extending through the plant soil of said pot plant
- a fixing section in the top of said elongated part, where said fixing section is adapted for fixing said pot plant in the top of said elongated part.

2. A stem for pot plants as described in claims 1-2, where said fixing section comprises a ring part from where at least one hook extends.

3. A stem for pot plants as described in claims 1-2 and 4, where said stem for pot plants is hollow.

4. A stem for pot plants as described in claims 1-2, where said elongated part has one or more positions at which it can be broken of by hand.

5. A stem for pot plants as described in claims 1-2, where the material of said stem is steel, wood, plastic and/or iron.
